# FASCICULE DE BREVET EUROPEEN

(11) **EP 1 132 653 B1**
(45) Date de publication et mention de la délivrance du brevet: **22.10.2003**
(21) Numéro de dépôt: 01400627.4
(22) Date de dépôt: 09.03.2001
(51) Int. Cl.: F16H 57/02

(54) **Procédé de fabrication d'une série de réducteurs**
Verfahren zur Herstellung für eine Reihe von Untersetzungsgetrieben
Procedure of production for a series of reduction gearings

(30) Priorité: 10.03.2000 FR 0003086
(43) Date de publication de la demande: 12.09.2001
(73) Titulaire: MOTEURS LEROY-SOMER, 16000 Angouleme (FR)
(72) Inventeur: Hugues, Jean-Guy, 16400 Puymoyen (FR)
(74) Mandataire: Tanty, François

(56) Documents cités:
- DD-A- 220 679
- GB-A- 1 005 314
- US-A- 3 673 885
- US-A- 5 067 361

## Description

La présente invention concerne le domaine général des réducteurs, notamment ceux destinés à équiper des moteurs électriques.

Un réducteur comporte, d'une manière générale, au moins un pignon et une roue engrenant avec ce pignon, logés dans un boîtier, la distance entre les axes de rotation du pignon et de la roue définissant une valeur d'entraxe.

Certains réducteurs comportent plusieurs trains d'engrenages, dont au moins un train d'entrée et un train de sortie.

En fonction des utilisations, le rapport de réduction n'est pas le même.

Il existe un besoin pour disposer d'une gamme de rapports de réduction dont les valeurs progressent d'une manière prédéterminée, afin qu'une gamme complète puisse couvrir tous les besoins des utilisateurs.

Afin de rationaliser la production, on a cherché à diminuer le nombre de pignons et de roues utilisés pour constituer une telle gamme.

On a ainsi proposé dans le brevet US 5 067 361 de corréler la progression des valeurs d'entraxe avec celle des rapports de réduction, de telle sorte qu'un même pignon se retrouve sur une même diagonale de la matrice définie par l'ensemble des valeurs d'entraxe et des rapports de réduction.

L'inconvénient de ce procédé est d'obliger à utiliser des valeurs d'entraxe spécifiques qui ne permettent pas de réutiliser, pour construire la série de réducteurs, des boîtiers de réducteurs existants avec des valeurs d'entraxes prédéterminées.

La présente invention vise à fabriquer une nouvelle série de réducteurs ayant des rapports de réduction et des valeurs d'entraxe imposés.

L'invention y parvient grâce à un procédé de fabrication comportant les étapes consistant à :
- définir un ensemble initial de pignons,
- définir un ensemble initial de valeurs d'entraxe,
- définir une gamme souhaitée de rapports de réduction,
- définir, pour chaque pignon de l'ensemble initial de pignons et une valeur d'entraxe choisie parmi l'ensemble initial de valeurs d'entraxe, un ensemble de roues susceptibles d'engrener avec ce pignon,
- sélectionner, pour un entraxe prédéterminé et un rapport de réduction prédéterminé de la gamme, les couples (pignon, roue) permettant d'obtenir un rapport de réduction ne différant de ce rapport de réduction prédéterminé que dans une limite prédéfinie,
- appliquer des critères de sélection aux couples ainsi retenus en vue de réduire le nombre de pignons et de roues utilisés,
- fabriquer la série de réducteurs avec les valeurs d'entraxe, les rapports de réduction et les pignons ainsi sélectionnés.

De préférence, l'ensemble initial de pignons est défini au moins partiellement à partir d'un parc de pignons existants.

De préférence également, l'ensemble initial de valeurs d'entraxe est défini au moins partiellement à partir d'un parc de boîtiers de réducteurs existants, présentant au moins deux valeurs d'entraxe.

L'invention s'avère d'autant plus intéressante que le nombre de valeurs d'entraxe est élevé, ce nombre étant supérieur ou égal à six ou neuf valeurs par exemple.

Ainsi, l'invention permet de réutiliser, pour construire une nouvelle série de réducteurs, des boîtiers de réducteurs existants ainsi que les outils d'usinage servant à réaliser les pignons existants, ce qui permet de réduire les coûts.

Il est bien entendu possible de supprimer, d'ajouter ou de modifier une ou des valeurs d'entraxe au sein du parc existant.

De préférence, chaque ensemble de roues associé d'une part à un pignon donné de l'ensemble initial de pignons et d'autre part à une valeur d'entraxe donnée de l'ensemble initial de valeurs d'entraxe, comporte des roues dont le nombre de dents varie dans des limites prédéterminées par rapport à un nombre de dents nominal.

Pour un entraxe prédéterminé et un pignon prédéterminé, le nombre de dents nominal de la roue est celui qui permet à l'engrenage ainsi constitué d'atteindre la somme de déport la plus proche de zéro.

On tire profit de cette manière du fait que le nombre de dents d'une roue peut varier de quelques dents pour une valeur d'entraxe et un pignon donnés sans empêcher le réducteur de fonctionner correctement.

Bien entendu, la variation du nombre de dents admissible dépend des tolérances que l'on se fixe sur le rapport de réduction autour d'une valeur nominale prédéterminée.

La sélection opérée parmi les couples (pignon, roue) permettant d'obtenir un rapport de réduction souhaité pour une valeur d'entraxe prédéterminée, peut comporter l'étape consistant à ne garder que les couples (pignon, roue) dont le déport est compris entre des limites prédéfinies.

De préférence, on élimine les roues qui ne permettent pas à l'engrenage (entraxe, pignon, roue) d'avoir la capacité requise.

De préférence encore, lorsque plusieurs pignons conviennent pour un couple (rapport de réduction, valeur d'entraxe) on retient parmi ces pignons ceux qui doivent être obligatoirement utilisés car constituant la solution unique d'un autre couple (rapport de réduction, valeur d'entraxe).

Si, pour un couple (rapport de réduction, valeur d'entraxe) plusieurs pignons conviennent, on garde de préférence celui qui est le plus utilisé, afin de bénéficier d'une économie d'échelle.

De préférence, le procédé selon l'invention est mis en oeuvre pour déterminer les pignon et roue du train d'entrée du réducteur, car c'est le train d'entrée qui autorise les plus larges combinaisons de fabrication en termes de variation du rapport de réduction et de connexion avec le moteur ou la machine menante.

La gamme de rapports de réduction peut comporter au moins dix valeurs par exemple.

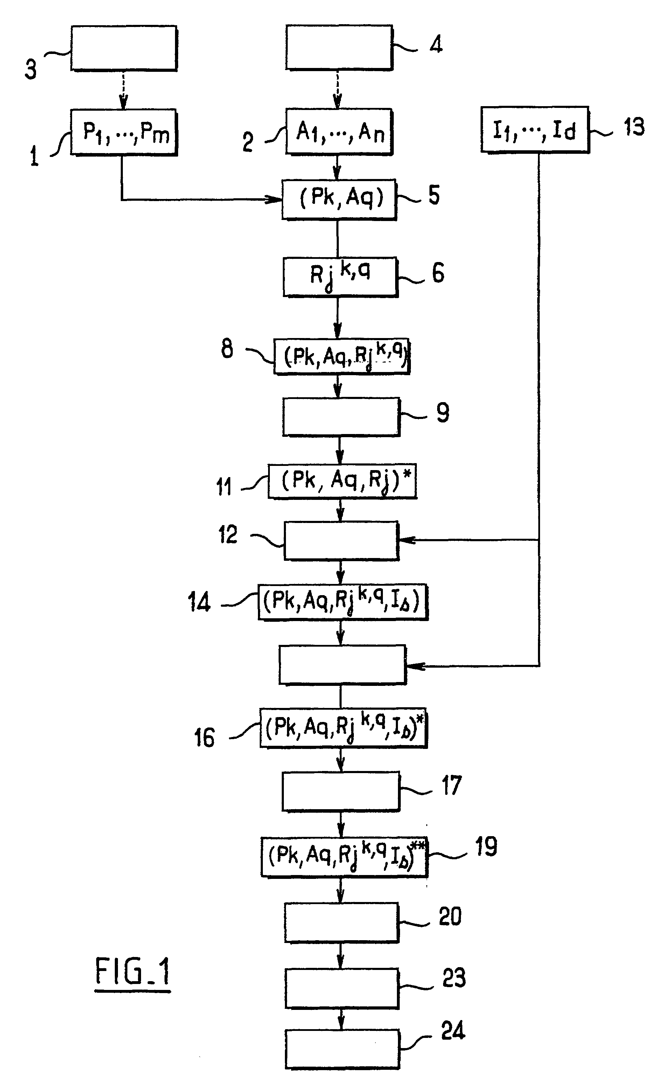

L'invention sera mieux comprise à la lecture de la description détaillée qui va suivre, d'un exemple de mise en oeuvre non limitatif, et à l'examen du dessin annexé sur lequel la figure 1 illustre, de manière très schématique, différentes étapes du procédé.

Conformément à l'invention, on commence par définir un ensemble initial 1 de pignons P₁, ..., Pₘ, un ensemble initial 2 de valeurs d'entraxe A₁, ..., Aₙ et une gamme 13 de rapports de réduction souhaités I₁, ..., I_{d}.

Dans l'exemple décrit, l'ensemble initial 1 est constitué à partir d'un parc 3 de dentures de pignon existantes, comprenant par exemple plus d'une cinquantaine de dentures.

Autrement dit, les pignons Pᵢ peuvent être réalisés au moyen des mêmes outils d'usinage que les pignons existants, la largeur de denture étant toutefois susceptible de varier entre les pignons de l'ensemble initial 1 et ceux du parc existant 3 en fonction de la capacité requise.

Le diamètre extérieur de quelques pignons est susceptible de varier essentiellement dans le sens d'une diminution, pour permettre un engrènement avec différentes roues.

Les valeurs d'entraxe A; de l'ensemble 2 correspondent dans l'exemple de réalisation décrit à celles du train d'entrée d'un parc 4 de boîtiers de réducteurs existants.

Il y a par exemple au moins cinq valeurs d'entraxe.

On regroupe dans la gamme 13 les rapports de réduction I_{1,}..., I_{d} que l'on souhaite pour la série de réducteurs.

Dans l'exemple décrit, les rapports de réduction Iⱼ se suivent comme les éléments d'une série de Renard, par exemple une série de Renard a au moins vingt valeurs.

A partir des ensembles 1 et 2 définis plus haut, on constitue un ensemble 5 de couples (Pₖ, A_{q}).

On associe à chaque couple de pignon et de valeur d'entraxe (Pₖ, A_{q}) de l'ensemble 5 un ensemble 6 de roues Rⱼ^{k,q} capables d'engrener avec le pignon Pₖ si la valeur d'entraxe est égale à Aq.

On admet, pour constituer l'ensemble 6, des roues Rⱼ^{k,q} compatibles sur le plan géométrique et dont le nombre de dents s'écarte, dans des limites prédéfinies, d'un nombre de dents nominal.

Dans l'exemple décrit, on autorise un écart de trois dents en plus du nombre de dents nominal et de deux dents en moins du nombre de dents nominal.

Ainsi, dans le cas où par exemple pour un pignon Pₖ et une valeur d'entraxe A_{q} donnés, la roue engrenant avec ce pignon comporte normalement 48 dents, on constitue l'ensemble 6 en sélectionnant des roues ayant entre 46 et 51 dents.

Dans l'exemple de réalisation décrit, la largeur des roues Rⱼ^{k,q} est imposée.

On obtient ainsi un ensemble 8 de triplets (Pₖ, A_{q}, Rⱼ^{k,q}).

On effectue, à l'étape 9, une première sélection parmi l'ensemble 8 en éliminant les triplets (Pₖ, A_{q}, Rⱼ^{k,q}) dont le coefficient de déport n'est pas compris dans des limites prédéfinies, par exemple -1 et +1,5.

Pour la définition du coefficient de déport, on se reportera à la norme ISO 1122-1 d'octobre 1998.

Cette sélection effectuée, on obtient un ensemble 11 de triplets (Pₖ, A_{q}, Rⱼ^{k,q})^{*} dans lequel le nombre de triplets a été réduit par rapport à l'ensemble 8.

On calcule à l'étape 12 le rapport de réduction correspondant à chaque triplet (Pₖ, A_{q}, Rⱼ^{K,q})^{*} et l'on associe à ce triplet la valeur nominale Iₛ de la gamme 13 de rapports de réduction qui est la plus proche du rapport de réduction ainsi calculé.

On constitue ainsi un ensemble 14 de quadruplets (Pₖ, A_{q}, Rⱼ^{k,q}, Iₛ).

On effectue ensuite une sélection parmi cet ensemble de quadruplets (Pₖ, A_{q}, Rⱼ^{k,q}, Iₛ) en éliminant ceux pour lesquels le rapport de réduction calculé s'écarte du rapport de réduction nominal Iₛ d'une limite prédéterminée, par exemple 3,5 %.

On obtient alors un ensemble 16 de quadruplets (Pₖ, A_{q} , Rⱼ^{k,q}, Iₛ)^{*} comprenant moins d'éléments que l'ensemble 14.

Plusieurs quadruplets (Pₖ, A_{q}, Rⱼ^{k,q}, Iₛ)^{*} peuvent avoir les mêmes couples de valeurs A_{q}, Iₛ.

De plus, parmi ces quadruplets, pour un même pignon Pₖ, il peut exister plusieurs roues Rⱼ^{k,q}.

On applique alors, à l'étape 17, un critère de sélection supplémentaire pour éliminer des roues Rⱼ^{k,q}.

Ce critère de sélection peut consister, par exemple, à ne retenir que la roue Rⱼ^{k,q} qui permet à l'engrenage (entraxe, pignon, roue) d'avoir la capacité qui correspond le mieux à l'utilisation qui doit être faite du réducteur.

On obtient après cette sélection un ensemble 19 de quadruplets (Pₖ, A_{q}, Rⱼ^{k,q},Iₛ)** qui peut se représenter sous la forme d'un tableau à deux entrées A_{q} et Iₛ.

Dans ce tableau, à chaque pignon Pₖ et valeur d'entraxe A_{q} est associée une seule roue Rⱼ^{k,q}.

On donne ci-dessous un exemple d'un tel tableau.

| | | | | | | | |
|---|---|---|---|---|---|---|---|
| | I₅ = 5,01 | I₆ = 4,47 | I₇ = 3,98 | I₈ = 3,55 | I₉ = 3,16 | I₁₀ = 2,82 | I₁₁ = 2,51 |
| A₁= 35,5 | P₁₁ P₃₂ | P₉ P₁₀ P₃₁ | P₉ P₃₀ | P₈ P₂₉ | P₇ P₂₈ P27 | P₅ P₆ P50 P₄₉ | P₅ P₂₆ P₄₈ |
| A₂ = 43 | P₃₀ | P₈ P₂₉ P₇₁ | P₇ P₂₈ P₅₀ P₇₀ | P₅ P₆ P₂₇ P₄₉ P₆₉ | P₄ P₂₆ P₆₈ P₄₈ | P₃ P₂₅ P₄₇ P₆₇ P₆₈ | P₂ P₂₄ P₄₆ |
| A₃ = 55,5 | P₂₇ P₄₉ P₆₉ | P₂₆ P₄₈ P₈₉ P₉₀ | P₂₅ P₄₇ P₆₇ P₆₈ | P₂₄ P₄₆ P₈₈ | P₂₃ P₄₅ P₆₆ P₈₇ | P₂₁ P₂₂ P₄₄ P₆₅ P₈₆ | P₂₀ P₄₃ P₆₄ P₈₅ |
| A₄ = 70 | P₆₇ P₈₈ | P₆₆ P₈₇ | P₆₅ P₈₆ | P₆₄ | P₆₃ P₈₅ | P₆₂ P₈₄ | P₆₁ P₈₃ |
| A₅ = 87 | P₈₆ P₁₀₇ P₁₀₈ | **P**_{**85**} | P₈₄ P₁₀₆ | P₈₃ P₁₀₅ | P₈₂ P₁₀₃ P₁₀₄ | P₈₁ P₁₀₂ | P₅₈ P₈₀ P₁₀₂ |
| A₆ = 110 | P₁₀₅ | P₁₀₄ P₁₂₂ P₁₂₃ | P₁₀₃ P₁₂₁ | P₁₀₂ P₂₀ | P₁₀₁ P₁₁₉ | P₁₀₀ P₁₁₈ | P₇₇ P₉₉ |
| A₇ = 124 | P₁₀₃ P₁₀₄ P₁₂₂ | P₁₀₂ P₁₂₁ P₁₄₀ P₁₄₁ | P₁₀₁ P₁₂₀ | P₁₁₉ P₁₃₈ P₁₃₉ | P₁₀₀ P₁₁₈ | P₉₈ P₉₉ P₁₁₇ P₁₃₇ | P₉₇ P₁₁₆ P₁₃₆ |
| A₈ = 145 | P₁₄₀ | P₁₃₉ | P₁₃₈ | P₁₃₇ | P₁₃₆ | P₁₃₅ | P₁₃₄ |
| A₉ = 180 | P₁₃₇ | P₁₃₆ | P₁₅₃ | P₁₃₅ P₁₅₂ P₁₅₈ | P₁₃₃ P₁₅₁ | P₁₃₂ P₁₅₀ P₁₅₇ | P₁₃₁ P₁₄₉ P₁₅₆ |

On constate à l'examen de ce tableau que l'on peut avoir, pour un même couple (A_{q}, Iₛ) plusieurs pignons qui conviennent.

Par contre, pour d'autres couples (A_{q}, Iₛ) il existe un seul pignon.

Lorsqu'il existe plusieurs pignons possibles pour un même couple (A_{q}, Iₛ), on garde à l'étape 20 ceux qui sont obligatoires, c'est-à-dire ceux qui constituent l'unique solution de certains couples (A_{q}, Iₛ).

C'est par exemple le cas du pignon **P**₈₅ dans le tableau ci-dessus.

Ensuite, on retient à l'étape 23 les pignons les plus utilisés.

On obtient alors un ensemble 24 ne comportant, pour chaque couple (A_{q}, Iₛ) qu'un seul pignon.

A ce pignon est associée une roue.

On ne sort pas du cadre de l'invention lorsque l'on ne conserve pas qu'une seule roue pour chaque triplet (entraxe, rapport de réduction, pignon) mais toutes celles répondant à un ou plusieurs critères comme notamment une capacité minimale de l'engrenage.

Cela permet de diminuer le nombre de solutions uniques et de faciliter la sélection.

Bien entendu, l'invention n'est pas limitée à l'exemple qui vient d'être décrit.

On peut notamment appliquer des critères de sélection supplémentaires en vue d'affiner la sélection lorsque plusieurs pignons et roues sont possibles pour un couple donné (A_{q}, Iₛ).

Comme critère supplémentaire, on peut imposer par exemple un rapport de recouvrement supérieur à 1.

Dans l'exemple qui vient d'être décrit, le procédé est appliqué à un ensemble de valeurs d'entraxe A_{q} correspondant à une gamme de réducteurs existante.

On ne sort pas du cadre de la présente invention lorsque l'on applique le procédé à un ensemble de valeurs d'entraxe ne correspondant pas à une gamme existante, mais à des valeurs d'entraxe calculées de manière à être corrélées à la progression des rapports de réduction, à l'instar de ce qui est décrit dans le brevet US 5 067 361 précité.

On peut encore ajouter des valeurs d'entraxe pour répondre à des contraintes de conception, telles que des contraintes de roulement, d'encombrement du carter, de hauteur d'axe du moteur, ...

## Revendications

1. Procédé de fabrication d'une série de réducteurs ayant des rapports de réduction (Iₛ) et des valeurs d'entraxes (A_{q}) imposés, **caractérisé par le fait qu'**il comporte les étapes consistant à
- définir un ensemble initial (1) de pignons (P₁, .... Pₘ),
- définir un ensemble initial (2) de valeurs d'entraxe (A₁, ..., Aₙ),
- définir une gamme souhaitée de rapports de réduction (I₁, ...,I_{d}),
- définir, pour chaque pignon de l'ensemble initial (1) de pignons et une valeur d'entraxe choisie parmi l'ensemble initial (2) de valeurs d'entraxe, un ensemble de roues (Rⱼ) susceptibles d'engrener avec ce pignon,
- sélectionner, pour une valeur d'entraxe (A_{q}) prédéterminée et un rapport de réduction prédéterminé (Iₛ), les couples (pignon, roue) permettant d'obtenir un rapport de réduction ne différant de ce rapport de réduction prédéterminé que dans une limite prédéfinie,
- appliquer des critères de sélection aux couples ainsi retenus en vue de réduire le nombre de pignons et de roues utilisés,
- fabriquer la série de réducteurs avec les valeurs d'entraxe, les rapports de réduction et les pignons ainsi sélectionnés.

2. Procédé selon la revendication 1, **caractérisé par le fait que** l'ensemble initial (1) de pignons (P₁, ..., Pₘ)est défini au moins partiellement à partir d'un parc (3) de pignons existants.

3. Procédé selon l'une des revendications 1 et 2, **caractérisé par le fait que** l'ensemble initial (2) de valeurs d'entraxe (A₁, ..., Aₙ) est défini au moins partiellement à partir d'un parc (4) de boîtiers de réducteurs existants.

4. Procédé selon l'une quelconque des revendications précédentes, **caractérisé par le fait que** chaque ensemble de roues associé d'une part à un pignon (Pₖ) donné de l'ensemble initial (1) de pignons et d'autre part à une valeur d'entraxe donnée (A_{q}) de l'ensemble initial (2) de valeurs d'entraxe, comporte des roues (Rⱼ^{k,q}) dont le nombre de dents varie dans des limites prédéterminées par rapport à un nombre de dents nominal.

5. Procédé selon l'une quelconque des revendications précédentes, **caractérisé par le fait que** la sélection opérée parmi les couples (pignon, roue) permettant d'obtenir un rapport de réduction souhaité pour une valeur d'entraxe prédéterminée, comporte l'étape consistant à ne garder que les couples (pignon, roue) dont le déport est compris entre des limites prédéfinies.

6. Procédé selon la revendication précédente, **caractérisé par le fait que** l'on élimine les roues qui ne permettent pas à l'engrenage (entraxe, pignon, roue) d'avoir la capacité requise.

7. Procédé selon l'une quelconque des revendications précédentes, **caractérisé par le fait que** lorsque plusieurs pignons (Pₖ) conviennent pour un couple (rapport de réduction, valeur d'entraxe), on retient parmi ces pignons ceux qui doivent être obligatoirement utilisés car constituant la solution unique d'un autre couple (rapport de réduction, valeur d'entraxe).

8. Procédé selon l'une quelconque des revendications précédentes, **caractérisé par le fait que** si pour un couple (rapport de réduction, valeur d'entraxe), plusieurs pignons conviennent, on garde celui qui est le plus utilisé, afin de bénéficier d'une économie d'échelle.

9. Procédé selon l'une quelconque des revendications précédentes, **caractérisé par le fait qu'**il est mis en oeuvre pour déterminer les pignon et roue du train d'entrée du réducteur.

10. Procédé selon l'une quelconque des revendications précédentes, **caractérisé par le fait que** la gamme de rapports de réduction (I₁,..., I_{d}) constitue une série de Renard.

11. Procédé selon l'une quelconque des revendications précédentes, **caractérisé par le fait que** la gamme de rapports de réduction comporte au moins dix valeurs (I₁,..., I_{d}).

12. Procédé selon l'une quelconque des revendications précédentes, **caractérisé par le fait que** l'ensemble initial de valeurs d'entraxe comporte au moins six valeurs, de préférence au moins neuf valeurs.

## Patentansprüche

1. Verfahren zur Herstellung einer Reihe von Untersetzungsgetrieben mit zugehörigen Untersetzungsverhältnissen (Iₛ) und Achsabstandswerten (A_{q}), **dadurch gekennzeichnet, daß**:
ein Anfangssatz (1) kleiner Zahnräder (P₁, ..., Pₘ) definiert wird,
ein Anfangssatz (2) von Achsabstandswerten (A₁, ..., An) definiert wird,
eine gewünschte Skala von Untersetzungsverhältnissen (I₁, ..., I_{d}) definiert wird,
für jedes kleine Zahnrad des Anfangssatzes (1) kleiner Zahnräder und einen aus dem Anfangssatz (2) der Achsabstandswerte ausgewählten Achsabstandswert ein Satz Groβräder (Rⱼ) zum Eingriff mit dem kleinen Zahnrad definiert wird,
für einen vorbestimmten Achsabstandswert (A_{q}) und ein vorbestimmtes Untersetzungsverhältnis (Iₛ) Paare (kleines Zahnrad, GroBrad) zum Erhalten eines Untersetzungsverhältnisses ausgewählt werden, das von dem vorbestimmten Untersetzungsverhältnis nur innerhalb eines vorbestimmten Grenzbereichs abweicht,
Auswahlkriterien auf die Paare angewendet werden, um solche mit geringerer Anzahl von verwendeten kleinen Zahnrädern und Groβrädern zu behalten,
die Reihe von Untersetzungsgetrieben mit den so ausgewählten Achsabstandswerten, Untersetzungsverhältnissen und kleinen Zahnrädern hergestellt wird.

2. Verfahren nach Anspruch 1, **dadurch gekennzeichnet, daß** der Anfangssatz (1) kleiner Zahnräder (P₁, ..., Pₘ) wenigstens teilweise ausgehend von einem Pool (3) existierender kleiner Zahnräder definiert wird.

3. Verfahren nach einem der Ansprüche 1 und 2, **dadurch gekennzeichnet, daß** der Anfangssatz (2) von Achsabstandswerten (A₁, ..., Aₙ) wenigstens teilweise ausgehend von einem Pool (4) existierender Untersetzungsgetriebegehäuse definiert wird.

4. Verfahren nach einem der vorstehenden Ansprüche, **dadurch gekennzeichnet, daß** jeder Satz Großräder einerseits einem kleinen Zahnrad (Pₖ) aus dem Anfangssatz (1) kleiner Zahnräder und andererseits einem Achsabstandswert (A_{q}) aus dem Anfangssatz (2) von Achsabstandswerten zugeordnet ist und Großräder (Rⱼ^{k,q}) enthält, bei denen die Anzahl der Zähne innerhalb der vorbestimmten Grenzen bezogen auf eine Nominalanzahl von Zähnen variiert.

5. Verfahren nach einem der vorstehenden Ansprüche, **dadurch gekennzeichnet, daß** die durchgeführte Auswahl aus den Paaren (kleines Zahnrad, Großrad) es erlaubt, ein gewünschtes Untersetzungsverhältnis für einen vorbestimmten Achsabstandswert zu erhalten, wobei nur Paare (kleines Zahnrad, Großrad) beibehalten werden, deren Versetzung innerhalb der vorbestimmten Grenzwerte liegt.

6. Verfahren nach dem vorstehenden Anspruch, **dadurch gekennzeichnet, daß** die Großräder beseitigt werden, die in Eingriff (Achsabstand, kleines Zahnrad, Großrad) nicht die erforderliche Kapazität aufweisen.

7. Verfahren nach einem der vorstehenden Ansprüche, **dadurch gekennzeichnet, daß**, falls mehrere kleine Zahnräder (Pₖ) für ein Paar (Untersetzungsverhältnis, Achsabstand) in Frage kommen, diejenigen kleinen Zahnräder behalten werden, deren Verwendung obligatorisch ist, weil sie eine einzige Lösung für ein anderes Paar (Untersetzungsverhältnis, Achsabstandswert) darstellen.

8. Verfahren nach einem der vorstehenden Ansprüche, **dadurch gekennzeichnet, daß**, falls für ein Paar (Untersetzungsverhältnis, Achsabstandswert) mehrere kleine Zahnräder in Frage kommen, das am meisten verwendete beibehalten wird, um von der Stufeneinsparung zu profitieren.

9. Verfahren nach einem der vorstehenden Ansprüche, **dadurch gekennzeichnet, daß** es zum Bestimmen der kleinen Zahnräder und Großräder des Untersetzungsgetriebeeingangs verwendet wird.

10. Verfahren nach einem der vorstehenden Ansprüche, **dadurch gekennzeichnet, daß** die Skala der Untersetzungsverhältnisse (I₁, ..., I_{d}) eine Renard-Serie bildet.

11. Verfahren nach einem der vorstehenden Ansprüche, **dadurch gekennzeichnet, daß** die Skala der Untersetzungsverhältnisse wenigstens zehn Werte (I₁, ..., I_{d}) umfaßt.

12. Verfahren nach einem der vorstehenden Ansprüche, **dadurch gekennzeichnet, daß** der Anfangssatz Achsabstandswerte wenigstens sechs Werte und vorzugsweise wenigstens neun Werte umfaßt.

## Claims

1. Method for the manufacture of a series of reduction gears having reduction ratios (Iₛ) and centre-to-centre values (A_{q}) which are imposed, **characterized in that** it has the stages consisting of:
- defining an initial set (1) of pinions (P₁, ..., Pₘ),
- defining an initial set (2) of centre-to-centre values (A₁, ..., Aₙ),
- defining a desired range of reduction ratios (I₁, ..., I_{d}),
- defining for each pinion of the initial set (1) of pinions and a centre-to-centre value chosen among the initial set (2) of centre-to-centre values, a set of wheels (Rⱼ) able to mesh with said pinion,
- selecting, for a predetermined centre-to-centre value (A_{q}) and a predetermined reduction ratio (Iₛ), the pairs (pinion, wheel) making it possible to obtain a reduction ratio only differing within a previously defined limit from said predetermined reduction ratio,
- applying selection criteria to the thus retained pairs with a view to reducing the number of pinions and wheels used,
- manufacturing the series of reduction gears with the centre-to-centre values, reduction ratios and pinions selected in this way.

2. Method according to claim 1, **characterized in that** the initial set (1) of pinions (P₁, ..., Pₘ) is at least partly defined on the basis of a group (3) of existing pinions.

3. Method according to one of the claims 1 and 2, **characterized in that** the initial set (2) of centre-to-centre values (A₁, ..., Aₙ) is at least partly defined on the basis of a group (4) of existing reduction gearboxes.

4. Method according to any one of the preceding claims, **characterized in that** each set of wheels associated on the one hand with a given pinion (Pₖ) of the initial set (1) of pinions and on the other with a given centre-to-centre value (A_{q}) of the initial set (2) of centre-to-centre values, has wheels (Rⱼ^{k,q}), whereof the number of teeth varies within predetermined limits with respect to a nominal number of teeth.

5. Method according to any one of the preceding claims, **characterized in that** the selection made among the pairs (pinion, wheel) making it possible to obtain a desired reduction ratio for a predetermined centre-to-centre value, involves the stage consisting only retaining the pairs (pinion, wheel), whose offset is within the previously defined limits.

6. Method according to the preceding claim, **characterized in that** elimination takes place of wheels not enabling the gearing (centre-to-centre, pinion, wheel) to have the requisite capacity.

7. Method according to any one of the preceding claims, **characterized in that** when several pinions (Pₖ) are suitable for a pair (reduction ratio, centre-to-centre value), among said pinions are retained those which must necessarily be used through forming the single solution of another pair (reduction ratio, centre-to-centre value).

8. Method according to any one of the preceding claims, if several pinions are suitable for a particular pair (reduction ratio, centre-to-centre value), the most widely used is retained in order to benefit from economies of scale.

9. Method according to any one of the preceding claims, **characterized in that** it is implemented for determining the pinion and wheel of the input train of the reduction gear.

10. Method according to any one of the preceding claims, **characterized in that** the range of reduction ratios (I₁, ..., I_{d}) constitutes a Renard series.

11. Method according to any one of the preceding claims, **characterized in that** the range of reduction ratios includes at least ten values (I₁, ..., I_{d}).

12. Method according to any one of the preceding claims, **characterized in that** the initial set of centre-to-centre values includes at least six values, preferably at least nine values.
